# EUROPEAN PATENT SPECIFICATION

(11) **EP 2 163 446 B1**
(45) Date of publication and mention of the grant of the patent: **27.02.2013**
(21) Application number: 09168281.5
(22) Date of filing: 20.08.2009
(51) Int. Cl.: B60T 8/17, B60T 7/20, B60T 8/52, B60T 8/18

(54) **G-sensor-controlled brake system with braking force sensor**
G-Sensor gesteuertes Bremssystem mit Bremskraftsensor
Système de freinage contrôlé par un détecteur de accélération avec capteur de force de freinage

(30) Priority: 16.09.2008 NL 2001986
(43) Date of publication of application: 17.03.2010
(73) Proprietor: Wagenbouw Bolle B.V., 8305 BC Emmeloord (NL)
(72) Inventor: Evers, Evert Jan, 8305 BC, Emmeloord (NL)
(74) Representative: Klavers, Cornelis

(56) References cited:
- EP-A- 1 674 366
- EP-A- 1 834 852
- EP-A- 1 967 426
- WO-A-95/28307
- GB-A- 1 389 474
- GB-A- 2 131 508
- GB-A- 2 267 134
- GB-A- 2 362 693
- US-A1- 2002 195 870

## Description

The present invention relates to a brake system according to the preamble of claim 1.

The invention also relates to a towed vehicle provided with such a brake system.

Such a brake system is known from GB-2.362.693A, which discloses a brake system for a towed vehicle that is supplementary to the standard inertia hitch braking system. The known system comprises a braking force control unit having an input for a brake signal from a towing vehicle, a sensor in the form of a first sensor provided on the towed vehicle which is provided with wheel brakes and which is coupled to the control unit. The brake system further comprises an at least partly electric actuator in the form of an air diaphragm and a compressor including its release solenoid and PWM speed control. The actuator being coupled to the control unit and the wheel brakes. The brake system further comprises a braking force sensor in the form of a second sensor interposed between the actuator at the one hand and at the other hand the wheel brakes and a brake rod coupled to the inertia hitch damper. The braking force sensor is coupled to the braking force control unit supplying the control unit with information concerning a force currently being generated by the air diaphragm. The actuator is fed with an electric feed signal from the control unit and generates at its actuator output a pushing or pulling movement that is transmitted to the braking force sensor. This sensor senses said force generated by the actuator, feeds said information to the control unit and transmits said movement to the wheel brakes and the brake rod. The output of the actuator is controlled by the control unit in such a manner that the current braking force apart from being influenced by the brake rod is also adjusted by pressurising or depressurising the air diaphragm. This intermittent pressure regulation results from a comparison of voltage outputs of both sensors and depend on the degrees of braking of the towing and towed vehicles.

The object of the present invention is to provide a brake system having a low cost price and exhibiting a higher degree of stability and precision.

In order to accomplish that object, the brake system according to the invention has the further features of claim 1.

The advantage of the brake system according to the invention is that the braking force sensor continuously supplies feedback information regarding the actual braking force being generated by the wheel brakes of the towed vehicle to the braking force control unit. This information is taken into account in the control strategy, which is implemented as software in the control unit, so as to precisely control the actual braking force being exerted in an advantageous manner.

The occurrence of values of the braking forces currently being generated by the wheel brakes that lie outside the actual control range is furthermore prevented in this manner, as a result of which the control stability of the control unit is improved and the reliability of the brake system according to the invention increases. Likewise, the occurrence of undesirable leaps or variations, such as vibrations, can be reduced on the basis of the aforesaid current information, which contributes to the level of safety of the brake system according to the invention.

Furthermore advantageous is the fact that the brake system according to the invention can be incorporated in existing overrun brake systems of towed vehicles in a relatively simple manner whilst retaining the aforesaid advantages. The well-known overrun brake that is frequently used in trailers, such as caravans, may be exchanged for the present brake system, if desired, so that problems such as undesirable activation of the brake system when driving downhill and overheating thereof will belong to the past.

A preferred embodiment of the brake system according to the invention is characterised in that the actuator is an electro-magnetic, electro-hydraulic or electro-pneumatic actuator, in particular an actuator which effects a rectilinear movement.

Advantageous as regards the linear electric actuator is the fact that internal losses, in particular in the form of friction, are low, so that a large part of the power supplied thereto can be effectively utilised by the wheel brakes. Furthermore, the precision of the linear outgoing mechanical movement of the actuator is high, it is easy to adjust and it has a favourable cost price.

Where in practice a statutory limit of a nominal supply voltage of 12 V and a current of at most 15 Ampere applies as regards the total electric actuator power input of at least partially electric actuators, such an actuator nevertheless appears to be able to produce sufficient braking force on account of the limited friction. The electric actuator, which has a rotary electric motor, is even capable of briefly generating a braking power higher than the aforesaid maximum electric actuator power. The fact is that upon braking initiated by the linear - rectilinear or translatory - actuator movement, also the rotary motion already available in the electric motor is utilised. Briefly put, on account of the flywheel effect the kinetic energy of the low-play ball rotation spindle in the actuator is effectively utilised for generating additional braking power.

Another embodiment of the brake system according to the invention is characterised in that the brake system, depending on the aforesaid type of wheel brakes, comprises one or more pneumatic, hydraulic or, if cables are provided between the cable-operated wheel brakes and said one braking force sensor, mechanical distribution means.

Advantageously, only one braking force sensor nevertheless suffices in such cases, which sensor supplies information to the control unit about the braking force currently being generated by all the wheel brakes.

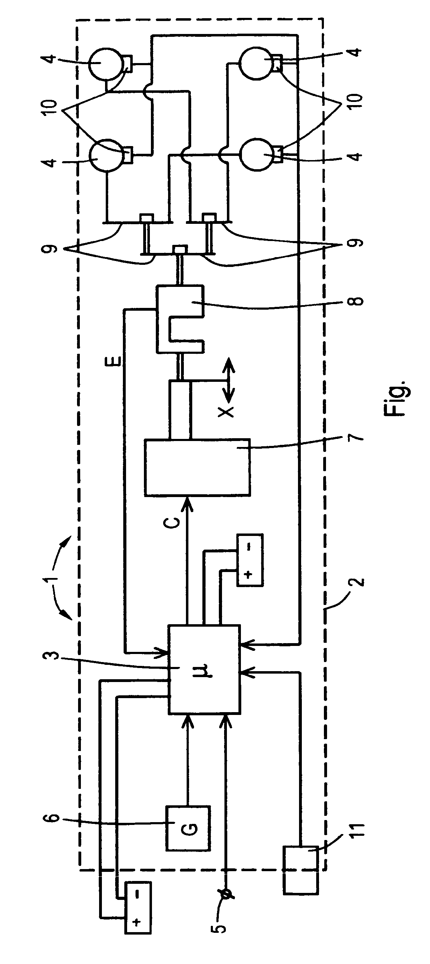

The brake system according to the present invention will now be explained in more detail with reference to the figure below, which is a schematic view of a possible embodiment of a brake system according to the invention.

The figure shows a brake system 1, which is installed on a towed vehicle 2 (illustrated in a dashed line), such as a semitrailer, a caravan or a trailer. The brake system 1 comprises a processor-controlled braking force control unit 3. Compound software is suitably implemented in the unit 3, which software is aimed at having wheel brakes 4 installed on wheels of the trailer 2 brake on command and in a prescribed manner. The control unit 3 has an input 5 for receiving a brake signal from a towing vehicle (not shown). The use of the brake signal ensures that the brake system 1 will only be activated if the towing vehicle is being braked as well. Installed on the trailer 2 is also a movement, motion or acceleration sensor, hereinafter called G-sensor 6, which delivers a signal representative of the extent of acceleration or deceleration of the trailer 2 to the control unit 3. The brake system 1 further comprises an actuator 7 connected to the control unit 3 and the wheel brakes 4 and one (in the figure) braking force sensor 8 interposed between the actuator 7 and the wheel brakes 4, which is also connected to the braking force control unit 3, which sensor is capable of measuring the braking force currently being generated by the wheel brakes 4 and feeding the information in question (E) back to the unit 3.

The operation of the brake system 1 is as follows. If it appears from the brake signal on the input 5 that the towing vehicle is braking, the software in the control unit 3 will deliver a feed signal C to the actuator 7. As is currently preferred, said feed signal C is an electric feed signal which is fed to the electro-mechanical (in that case) actuator 7. The actuator 7 effects a, furthermore preferably, linear, rectilinear, generally pushing or pulling movement (indicated at X with arrows pointing in opposite directions) at its output, which movement is transmitted to the respective wheel brakes 4 via the braking force sensor 8 for generating certain braking forces at said wheel brakes. The one (in this case) sensor 8 measures the force generated by the actuator 7 and transmitted to the wheel brakes 4, on the basis of which measurement the braking force is controlled by the unit 3 via the wheel brakes 4, in practice partially based on the G-sensor signal. The force measured by the sensor 8 is a measure of the braking force being generated and the relevant information (E) is fed back to the software-implemented controllable, so as to make the braking force correspond to a desired braking force by influencing (in this case) the movement X. The fact that the current value of the - total - braking force being generated is known has a positive effect on the stability and the reliability of the braking force control.

In an alternative embodiment, equivalently to that which has been explained in the foregoing, a hydraulic pressure in one or more brake cylinders, or a pneumatic pressure, instead of the aforesaid movement X, is influenced in such a manner that the braking force(s) measured by the sensor(s) 8 is (are) controlled to be practically equal to the desired braking force(s).

To make it possible to use only one actuator 7 and one braking force sensor 8, the brake system 1 comprises one or more cable distribution elements 9 arranged between the illustrated wheel brakes 4, which are operated by means of Bowden cables, and the one braking force sensor 8. It is also possible under certain circumstances to use the hydraulic or pneumatic equivalent of said elements 9.

In order to increase the reliability even further, several separate actuators 7 and sensor 8 might be used.

In case an electric linear actuator 7 is used, said sensor is preferably (in view of the statutory regulations) of the type which passes a current of at most 15 Ampere at a nominal supply voltage of 12 V.

In principle the wheel brakes 4 may be hydraulic or pneumatic brakes or brakes operated by means of one or more cables. If the cables are short, any stretch in the cables will have little effect on the braking force in practice. Within the range of the control, any play or stretch in the cables is automatically compensated by the control means in the unit 3 as a result of the use of the braking force sensor(s) 8, because control eventually takes place partially based on the desired braking force and the measured braking force.

If desired, in view of the statutory regulations, it is also possible to use axle load determining means 10 connected to the unit 3. The advantage that is obtained in this manner is that the weight of the cargo in the trailer, which presses on the respective wheel axles, is taken into account as well upon influencing the current braking force. In the case of the expected unequal axle loads, for example caused by unevenly distributed loads, several independent sensors 8 might be used to realise an individual control of the respective, possibly mutually different, required braking forces.

If the brake system 1 is installed on an existing trailer 2, it can replace the overrun brake that is normally present on the trailer 2.

In principle all kinds of different types of braking force sensors 8 may be used. Said sensors may for example be strain gauges, which are preferred because of their simplicity and their cost price. If the wheel brakes 4 are hydraulically controlled, the actual braking force can be determined on the basis of the pressure of the respective hydraulic fluid in the main brake cylinder, using a braking force sensor 8 configured as a pressure sensor, which communicates the pressure of the fluid to the control unit 3 in the form of an electrical feedback signal E. The linear (in the illustrated case) movement X at the output of the actuator 7 is then controlled in such a manner by the control unit 3 that the actual braking force is adjusted to the desired value.

In the figure a breakaway circuit 11 connected to the unit 3 is shown, which, for safety reasons, activates the unit 3 to maximise the braking force when the towing vehicle and the trailer 3 become separated while driving.

## Claims

1. A brake system (1) for a towed vehicle, comprising:
- a braking force control unit (3) having an input (5) for a brake signal from a towing vehicle,
- a sensor (6) provided on the towed vehicle which is provided with wheel brakes (4), which sensor (6) is coupled to the control unit (3),
- an at least partly electric actuator (7) which is coupled to the control unit (3) and the wheel brakes (4), and
- at least one braking force sensor (8) interposed between the actuator (7) and the wheel brakes (4), and coupled to the braking force control unit (3), which braking force sensor (8) supplies the control unit (3) with information (E) concerning a force, whereby the actuator (7) is fed with an electric feed signal (C) from the control unit (3) and generates at its output a pushing or pulling movement (X) that is transmitted to the braking force sensor (8), which sensor measures said force generated by the actuator (7), feeds the information (E) to the control unit (3) and transmits the movement (X) to the respective wheel brakes (4), and whereby the output of the actuator (7) is controlled by the control unit (3) in such a manner that the braking force may be adjusted, **characterised in that** the sensor (6) is a G-sensor, which delivers to the control unit (3) a G-sensor signal which is representative of the extent of acceleration or deceleration of the towed vehicle, that the control unit (3) controls the braking force of the towed vehicle (2) partially based on the G-sensor signal, that the braking force sensor (8) continuously supplies the information (E) concerning braking force currently being generated by the wheel brakes (4), that the control unit (3) implements the continuously supplied information in the form of feedback information (E) by software in its control strategy, and that the output of the actuator (7) is controlled by the control unit (3) in such a manner that the current braking force is adjusted to a desired value.

2. A brake system (1) according to claim 1, **characterised in that** the actuator (7) is an electro-magnetic, electro-hydraulic or electro-pneumatic actuator, in particular an actuator (7) which effects a rectilinear movement (X).

3. A brake system (1) according to any one of claims 1-2, **characterised in that** the actuator (7) is an electric actuator, which, controlled by the control unit (3), passes a current of at most 15 Ampere at a nominal supply voltage of 12 V.

4. A brake system (1) according to any one of claims 1-3, **characterised in that** the wheel brakes (4) are pneumatic or hydraulic brakes or brakes operated by means of one or more cables.

5. A brake system (1) according to claim 4, **characterised in that** the brake system (1), depending on the aforesaid type of wheel brakes (4), comprises one or more pneumatic, hydraulic or, if cables are provided between the cable-operated wheel brakes (4) and said one braking force sensor (8), mechanical distribution means (9).

6. A brake system (1) according to any one of claims 1-5, **characterised in that** the brake system (1) comprises axle load determining means (10) coupled to the braking force control unit (3).

7. A towed vehicle, such as a trailer, a caravan or the like, provided with a brake system (1) according to any one of the claims 1-6.

## Patentansprüche

1. Bremssystem (1) für ein geschlepptes Fahrzeug, aufweisend:
- eine Bremskraftsteuereinheit (3), die einen Eingang (5) für ein Bremssignal von einem Schleppfahrzeug hat,
- einen Sensor (6), der auf dem geschleppten Fahrzeug bereitgestellt ist, das mit Radbremsen (4) versehen ist, wobei der Sensor (6) mit der Steuereinheit (3) gekoppelt ist,
- einen wenigstens teilweise elektrischen Aktuator (7), der mit der Steuereinheit (3) und den Radbremsen (4) gekoppelt ist, und
- wenigstens einen Bremskraftsensor (8), der zwischen dem Aktuator (7) und den Radbremsen (4) eingefügt ist, und der mit der Bremskraftsteuereinheit (3) gekoppelt ist, wobei der Bremskraftsensor (8) die Steuereinheit (3) mit Informationen (E) in Zusammenhang mit einer Kraft versorgt, wobei der Aktuator (7) mit einem elektrischen Eingangssignal (C) von der Steuereinheit (3) versorgt wird und an seinem Ausgang eine Schub- oder Zugbewegung (X) erzeugt, die zu dem Bremskraftsensor (8) übertragen wird, wobei der Sensor die Kraft, die von dem Aktuator (7) erzeugt wird, misst, die Informationen (E) zu der Steuereinheit (3) liefert und die Bewegung (X) zu den jeweiligen Radbremsen (4) überträgt, und wobei der Ausgang des Aktuators (7) von der Steuereinheit (3) derart gesteuert wird, dass die Bremskraft eingestellt werden kann,
**dadurch gekennzeichnet, dass** der Sensor (6) ein G-Sensor ist, der der Steuereinheit (3) ein G-Sensorsignal liefert, das für das Ausmaß der Beschleunigung oder Verlangsamung des geschleppten Fahrzeugs repräsentativ ist, dass die Steuereinheit (3) die Bremskraft des geschleppten Fahrzeugs (2) teilweise basierend auf dem G-Sensorsignal steuert, dass der Bremskraftsensor (8) ständig die Informationen (E) über die gerade von den Radbremsen (4) erzeugte Bremskraft liefert, dass die Steuereinheit (3) die ständig gelieferten Informationen in der Form von Feedbackinformation (E) durch Software in ihrer Steuerstrategie umsetzt, und dass der Ausgang des Aktuators (7) von der Steuereinheit (3) derart gesteuert wird, dass die aktuelle Bremskraft auf einen gewünschten Wert eingestellt wird.

2. Bremssystem (1) nach Anspruch 1, **dadurch gekennzeichnet, dass** der Aktuator (7) ein elektromagnetischer, elektrohydraulischer oder elektropneumatischer Aktuator ist, insbesondere ein Aktuator (7), der eine geradlinige Bewegung (X) ausführt.

3. Bremssystem (1) nach einem der Ansprüche 1 bis 2, **dadurch gekennzeichnet, dass** der Aktuator (7) ein elektrischer Aktuator ist, der, von der Steuereinheit (3) gesteuert, einen Strom von höchstens 15 Ampere mit einer Nennversorgungsspannung von 12 V durchlässt.

4. Bremssystem (1) nach einem der Ansprüche 1 bis 3, **dadurch gekennzeichnet, dass** die Radbremsen (4) pneumatische oder hydraulische Bremsen oder Bremsen sind, die mittels einem oder mehreren Kabeln bedient werden.

5. Bremssystem (1) nach Anspruch 4, **dadurch gekennzeichnet, dass** das Bremssystem (1) in Abhängigkeit von dem Typ der Radbremsen (4) eine oder mehrere pneumatische, hydraulische oder, wenn Kabel zwischen den kabelbedienten Radbremsen (4) und dem einen Bremskraftsensor (8) verwendet werden, mechanische Verteilungsmittel (9) aufweist.

6. Bremssystem (1) nach einem der Ansprüche 1 bis 5, **dadurch gekennzeichnet, dass** das Bremssystem (1) Achslastbestimmungsmittel (10) aufweist, die mit der Bremskraftsteuereinheit (3) gekoppelt sind.

7. Geschlepptes Fahrzeug, wie zum Beispiel ein Sattelauflieger, ein Wohnwagen oder dergleichen, das mit einem Bremssystem (1) nach einem der Ansprüche 1 bis 6 versehen ist.

## Revendications

1. Système de frein (1) pour un véhicule tracté, comprenant :
- une unité de commande de la force de freinage (3) ayant une entrée (5) pour un signal de frein provenant d'un véhicule tracteur,
- un capteur (6) placé sur le véhicule tracté qui est muni de freins de roues (4), le capteur (6) est couplé à l'unité de commande (3),
- un actionneur au moins partiellement électrique (7) qui est couplé à l'unité de commande (3) et aux freins de roues (4), et
- au moins un capteur de force de freinage (8) intercalée entre l'actionneur (7) et les freins de roues (4) couplé à l'unité de commande de la force de freinage (3), le capteur de la force de freinage (8) fournit à l'unité de commande (3) des informations (E) concernant une force, où l'actionneur (7) est alimenté avec un signal d'alimentation électrique (C) provenant de l'unité de commande (3) et génère à sa sortie un mouvement de poussée ou de traction (X) qui est transmis au capteur de la force de freinage (8), le capteur mesure ladite force générée par l'actionneur (7), fournit les informations (E) à l'unité de commande (3) et transmet le mouvement (X) aux freins de roues respectifs (4), et où la sortie de l'actionneur (7) est commandée par l'unité de commande (3) de sorte que la force de freinage puisse être ajustée, **caractérisé en ce que** le capteur (6) est un capteur-G, qui fournit à l'unité de commande (3) un signal du capteur-G qui est représentatif de la mesure de l'accélération ou de la décélération du véhicula tracté, l'unité de commande (3) commande la force de freinage du véhicule tracté (2) basé partiellement sur le signal du capteur-G, le capteur de la force de freinage (8) fournit de manière continue les informations (E) concernant la force de freinage actuellement générée par les freins de roues (4), l'unité de commande (3) met en place les informations fournies en continu sous la forme d'informations de retour (E) par un logiciel dans sa stratégie de commande, et la sortie de l'actionneur (7) est commandée par l'unité de commande (3) de sorte que la force de freinage actuelle est ajustée à une valeur désirée.

2. Système de frein (1) selon la revendication 1, **caractérisé en ce que** l'actionneur (7) est un actionneur électromagnétique, électro-hydraulique ou électropneumatique, en particulier un actionneur (7) qui effectue un mouvement rectiligne (X).

3. Système de frein (1) selon l'une quelconque des revendications 1-2, **caractérisé en ce que** l'actionneur (7) est un actionneur électrique, qui, commandé par l'unité de commande (3), passe un courant d'au maximum 15 Ampères à une tension d'alimentation nominale de 12 V.

4. Système de frein (1) selon l'une quelconque des revendications 1-3, **caractérisé en ce que** les freins de roues (4) sont des freins pneumatiques ou hydrauliques ou des freins actionnés au moyen d'un ou de plusieurs câbles.

5. Système de frein (1) selon la revendication 4, **caractérisé en ce que** le système de frein (1) selon le susdit type de freins de roues (4) comprend un ou plusieurs moyens de distribution pneumatique, hydraulique ou mécaniques (9), si des câbles sont fournis entre les freins de roues actionnés par câble (4) et ledit capteur de force de freinage (8).

6. Système de frein (1) selon l'une quelconque des revendications 1-5, **caractérisé en ce que** le système de frein (1) comprend un moyen de détermination de la charge de l'axe (10) couplé à l'unité de commande de la force de freinage (3).

7. Véhicule tracté, tel qu'une remorque, une caravane ou similaire, muni d'un système de frein (1) selon l'une quelconque des revendications 1-6.
